# EUROPEAN PATENT APPLICATION

(11) **EP 2 434 716 A1**
(43) Date of publication of application: **28.03.2012**
(21) Application number: 10777331.9
(22) Date of filing: 04.05.2010
(51) Int. Cl.: H04L 29/06, H04L 29/12, H04W 8/26

(54) **METHOD AND SYSTEM FOR ACQUIRING HOST IDENTITY TAG**

(30) Priority: 22.05.2009 CN 200910085509
(71) Applicant: Huawei Technologies Co., Ltd., Shenzhen, Guangdong 518129 (CN)
(72) Inventor: ZHANG, Dacheng, Shenzhen Guangdong 518129 (CN); XU, Xiaohu, Shenzhen Guangdong 518129 (CN)
(74) Representative: Epping - Hermann - Fischer
(86) International application number: PCT/CN2010/072429
(87) International publication number: WO 2010/133127

(57) **Abstract**

A method and a system for obtaining a Host Identity Tag (HIT) are disclosed. The method for obtaining an HIT includes: receiving an update message that carries a newly generated HIT; and obtaining the newly generated HIT from the update message. In the method and system for obtaining an HIT above, the latest HIT and the current IP address of the host are obtained from the update message directly, or a third-party server is used to obtain the latest HIT according to the mapping relationship between the new HIT and the old HIT. In this way, normal communication may be performed.

## Description

This application claims priority to Chinese Patent Application No. 200910085509.X, filed with the Chinese Patent Office on May 22, 2009 and entitled "METHOD AND SYSTEM FOR OBTAINING HOST IDENTITY TAG", which is incorporated herein by reference in its entirety.

### FIELD OF THE INVENTION

The present invention relates to communications technologies, and in particular, to a method and a system for obtaining a Host Identity Tag (HIT).

### BACKGROUND OF THE INVENTION

With the development of the Internet, operating environments of the Internet and services on the Internet have changed significantly, and limitations of the original design of the Internet show up.

One of the causes for the limitations is: An Internet Protocol (IP) address plays two roles, that is, a locator of an IP device/node in a network and an identity of a communication node. To ensure scalability of a routing system, the allocation of IP addresses needs to suit the network topology. However, an IP address serves as a host identifier at the same time, and the allocation of the IP address is generally based on the structure of an organization (rather than a topology) and needs to be relatively stable. The two roles of an IP address lead to close coupling between a transport layer and a network layer objectively. The transport layer uses a 5-tuple <transport layer protocol, source IP address, destination IP address, source port number, destination port number> to express the connection between nodes. The 5-tuple should remain unchanged throughout the connection process. However, when the IP address changes as a result of motion, dynamic IP address reallocation, or multi-homing, the 5-tuple corresponding to the connection also changes, which leads to interruption of the connection that bears communication currently. The update or upgrade of a transport-layer protocol also brings an enormous impact on the transport-layer protocol.

To separate the identity role from the network topology locator role of an IP address, the Host Identity Protocol (HIP) working group of the Internet Engineering Task Force Internet (IETF) puts forward a comprehensive solution. This solution introduces a new HIP layer and a new naming space between the network layer and the transport layer. In this way, the transport-layer protocol is separated from the network-layer protocol. The transport layer uses a Host Identifier (HI), and the HIP converts the HI into an IP address.

The identifier used by the HIP is called an HI. The HI is essentially a public key in a public/private key pair. Because the length of the HI varies sharply according to different public key algorithms, a fixed-length Host Identity Tag (HIT) is generally used in the actual protocol. An HIT is a 128-bit binary number generated by the HI through a chaotic encryption algorithm, and is a flat single-layer structure. An HIT serves as a host identifier only, and includes no other information. As a key is used for more and more times, the security of the key is lowered. When the security of the key decreases to a certain level or the key is cracked, the key needs to be replaced. The change of a public key of a host means the change of an HIT of the host. When the HIT of a host changes, the host needs to notify the change to potential visitors in a certain way. If the potential visitors are not notified, normal communication is impossible between the host and the visitors.

### SUMMARY OF THE INVENTION

Embodiments of the present invention provide a method and a system for obtaining a latest HIT to ensure normal communication.

An embodiment of the present invention provides a method for obtaining an HIT, including:
receiving an update message that carries a newly generated HIT; and
obtaining the newly generated HIT from the update message.

An embodiment of the present invention provides a method for obtaining an HIT, including:
receiving, by a third-party server, an update message that carries a newly generated HIT, and establishing a mapping relationship between the new HIT and a corresponding old HIT; and
obtaining, by a host, the newly generated HIT according to the old HIT and the mapping relationship.

An embodiment of the present invention provides a system for obtaining an HIT, including:
a first host, configured to send an update message that carries a newly generated HIT; and
a second host, configured to obtain the newly generated HIT from the update message sent by the first host.

An embodiment of the present invention provides a system for obtaining an HIT, including:
a first host, configured to send an update message that carries a newly generated HIT;
a third-party server, configured to receive the update message and establish a mapping relationship between the new HIT and a corresponding old HIT; and
a second host, configured to obtain the newly generated HIT according to the old HIT and the mapping relationship.

In the method and system for obtaining an HIT herein, the latest HIT and the current IP address of the host are obtained from the update message directly, or a third-party server is used to obtain the latest HIT according to the mapping relationship between the new HIT and the old HIT. In this way, normal communication is ensured.

### BRIEF DESCRIPTION OF THE DRAWINGS

FIG. 1 is a flowchart of a method for obtaining an HIT according to a first embodiment of the present invention;
FIG. 2 is a schematic diagram of HIT change in a host interaction process according to an embodiment of the present invention;
FIG. 3 is a flowchart of a method for obtaining an HIT according to a second embodiment of the present invention;
FIG. 4 is a schematic structural diagram of a system for obtaining an HIT according to a first embodiment of the present invention; and
FIG. 5 is a schematic structural diagram of a system for obtaining an HIT according to a second embodiment of the present invention.

### DETAILED DESCRIPTION OF THE EMBODIMENTS

The technical solutions of the present invention are detailed below with reference to the accompanying drawings and exemplary embodiments.

A method for obtaining an HIT according to a first embodiment of the present invention includes:
receiving an update message that carries a newly generated HIT; and
obtaining the newly generated HIT from the update message.

A method for obtaining an HIT according to a second embodiment of the present invention includes the following steps:
a third-party server receives an update message that carries a newly generated HIT, and establishes a mapping relationship between the new HIT and a corresponding old HIT; and
a host obtains the newly generated HIT according to the old HIT and the mapping relationship.

In the methods described above, a newly generated HIT is obtained in a scenario that involves a third-party server or involves no third-party server. The following describes a process of obtaining the newly generated HIT:

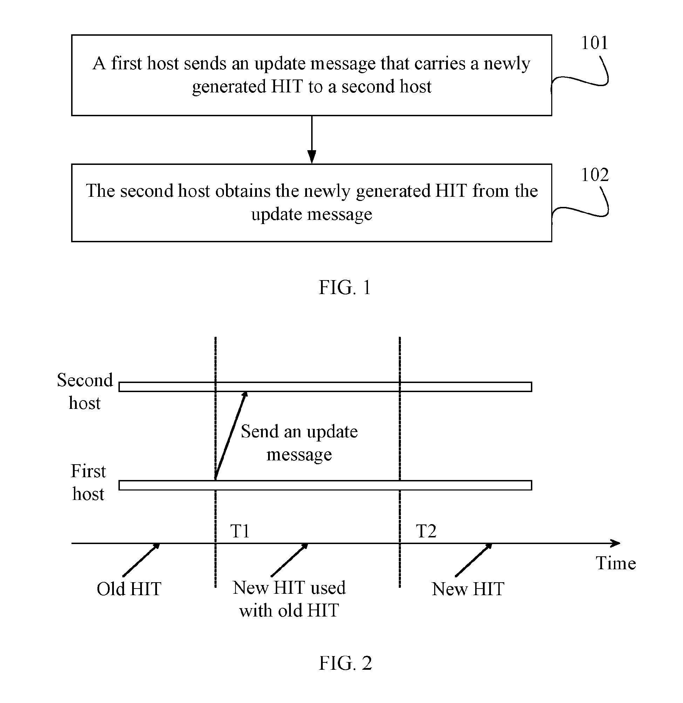

FIG. 1 is a flowchart of a method for obtaining an HIT according to a first embodiment of the present invention. The method includes the following steps:
101. A first host sends an update message that carries a newly generated HIT to a second host.

For example, an update packet in HIP packets is used to transmit an update message in communication. In this embodiment, an update packet may be used to transmit an HIT update message. The HIT update message may include the validity period and signature of the newly generated HIT. The first host may transmit the HIT update message through a newly created secure channel or an existing secure channel before an old HIT expires. Before the HIT update message is sent, a new secure channel needs to be created if no secure channel exists, and the HIT update message is sent through the new secure channel. A secure channel refers to a mechanism for transmitting information securely when both communication parties are in an insecure network environment. Functions of a secure channel include protecting secrecy and freshness of information and confirming correctness of an information source. A secure channel may be created through a standard HIP handshake protocol or through a conventional security protocol such as IP Security (IPSec), Secure Socket Layer (SSL), and Hypertext Transfer Protocol Secure (HTTPs).

102. The second host obtains the newly generated HIT from the update message.

The second host receives the update message from the first host, obtains the newly generated HIT (namely, the new HIT) from the update message, and obtains the IP address corresponding to a current first host, so as to implement normal communication between the first host and the second host.

In addition, the second host may be a host connected or to be connected to the first host. FIG. 2 shows a change process of an HIT during an interaction between the first host and the second host. First, the first host and the second host use an old HIT to create a communication channel through a 4-way handshake mechanism. The first host can transmit an update message through the communication channel. If a communication channel already exists between the first host and the second host, the existing communication channel is used to transmit the update message directly. After receiving the update message, the second host obtains a new HIT in the update message. In FIG. 2, T1 is the time of generating the new HIT, and T2 is the expiry time of the old HIT. After completion of the handshake, the first host may use a Security Parameter Index (SPI) to perform a session, and the update of the HIT brings no impact on the session.

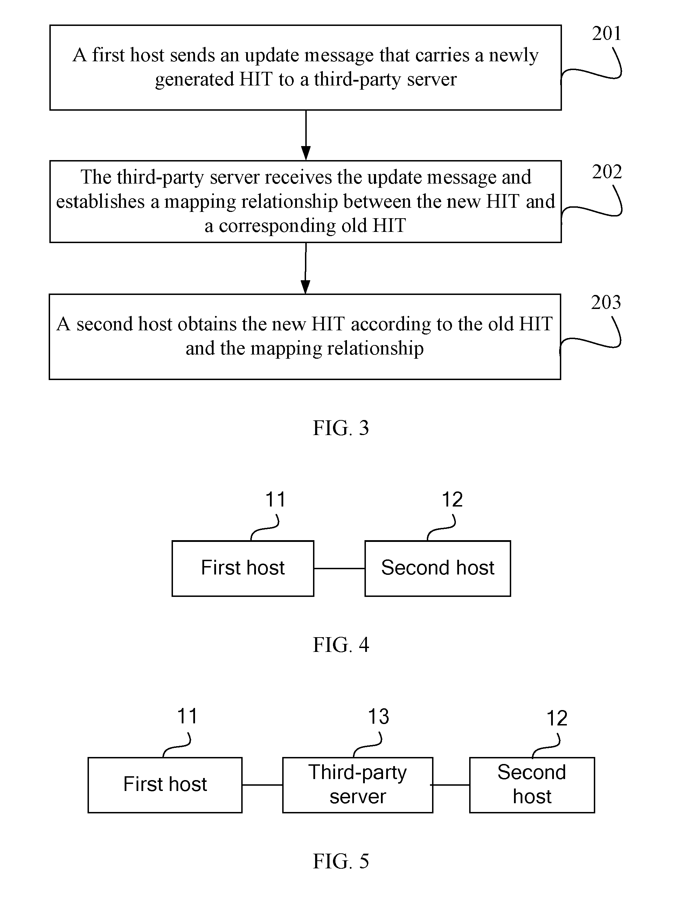

FIG. 3 is a flowchart of a method for obtaining an HIT according to a second embodiment of the present invention. The method includes the following steps:
201. A first host sends an update message that carries a newly generated HIT to a third-party server.

The third-party server may be a Domain Name System (DNS) server, or a server for mapping an HIT to an IP address, or a Rendezvous Server (RVS). The server for mapping the HIT to the IP address may include a Distributed Hash Table (DHT).

After a new HIT is generated and before an old HIT expires, the first host may use an old HIT-based secure channel created through an HIT handshake protocol to send the update message, or use a secure channel created through other security protocols to send the update message.

202. The third-party server receives the update message and establishes a mapping relationship between the new HIT and a corresponding old HIT.

After receiving the update message, the third-party server associates the new HIT carried in the update message with the old HIT, and establishes a mapping relationship between the new HIT and the old HIT, for example, a mapping relationship between the old HIT and a latest HIT, or a mapping relationship between the HIT in different periods and the old HIT.

203. A second host obtains the new HIT according to the old HIT and the mapping relationship between the new HIT and the old HIT.

The second host uses the old HIT to obtain the new HIT according to the mapping relationship between the new HIT and the old HIT. For example, when the first host updates an HIT, the first host notifies the third-party server such as an RVS. The RVS maintains the mapping from the expired HIT of the first host to a current HIT. Therefore, when the second host uses the expired HIT of the first host to access the RVS, the second host obtains the current HIT of the first host to communicate with the first host normally. For example, the second host obtains the current HIT of the first host in this way: The second host sends a message to the RVS, and the RVS returns a notification message indicating no relevant HIT; the second host requests the mapping from the old HIT to the new HIT; the RVS sends a message that carries the mapping relationship between the old HIT and the new HIT to the second host; and the second host obtains the new HIT according to the mapping relationship.

In the method for obtaining an HIT above, the latest HIT and the current IP address of the host are obtained from the update message directly, or a third-party server is used to obtain the latest HIT according to the mapping relationship between the new HIT and the old HIT. In this way, a communication channel can be created between the first host and the second host to perform normal communication, no error occurs in the upper-layer application protocol, and the session can go on. Moreover, the security strength of the HI falls within a permitted range, and the communication is more secure.

FIG. 4 is a schematic structural diagram of a system for obtaining an HIT according to a first embodiment of the present invention. The system includes: a first host 11, configured to send an update message that carries a newly generated HIT; and a second host 12, configured to obtain the newly generated HIT from the update message sent by the first host 11.

From the update message, the second host obtains the HIT newly generated by the first host and the current IP address of the first host, so as to communicate with the first host normally.

For the purpose of sending the update message, the first host may include: a first sending module, configured to send the update message through a newly created secure channel; and a second sending module, configured to send the update message through an existing secure channel.

In addition, the system for obtaining an HIT obtains the newly generated HIT in the same way as the method for obtaining an HIT according to the first embodiment of the present invention, which is not described here again.

In the system described above, the first host sends the update message to the second host, and the second host obtains the HIT newly generated by the first host and the current IP address of the first host from the update message so as to communicate with the first host normally.

FIG. 5 is a schematic structural diagram of a system for obtaining an HIT according to a second embodiment of the present invention. The system includes: a first host 11, configured to send an update message that carries a newly generated HIT; a third-party server 13, configured to receive the update message and establish a mapping relationship between the new HIT and a corresponding old HIT; and a second host 12, configured to obtain the newly generated HIT according to the old HIT and the mapping relationship between the new HIT and the old HIT.

The third-party server may include a DNS server, an RVS, and a server for mapping an HIT to an IP address. The server for mapping the HIT to the IP address may include a DHT.

When the third-party server is the server for mapping the HIT to the IP address, after obtaining the newly generated HIT, the second host can obtain the current IP address of the second host according to the newly generated HIT so as to communicate with the first host normally.

In addition, the system obtains the newly generated HIT in the same way as the method for obtaining an HIT according to the second embodiment of the present invention, which is not described here again.

In the system described above, the first host sends an update message to the third server, and the third server establishes the mapping relationship between the new HIT and the old HIT according to the new HIT carried in the update message, and the second host obtains the newly generated HIT according to the mapping relationship and the old HIT, so as to communicate with the first host normally. Moreover, the security strength of the HI falls within the permitted range, and the communication is more secure.

All or part of the embodiments of the present invention may be implemented by software, and relevant software programs may be stored in readable storage media such as a hard disk, a floppy disk, or a Compact Disk-Read Only Memory (CD-ROM).

Finally, it should be noted that the above embodiments are merely provided for describing the technical solutions of the present invention, but not intended to limit the present invention. It is apparent that persons skilled in the art can make modifications and variations to the present invention without departing from the spirit and scope of the present invention.

## Claims

1. A method for obtaining a Host Identity Tag (HIT), comprising:
receiving an update message that carries a newly generated HIT; and
obtaining the newly generated HIT from the update message.

2. The method according to claim 1, wherein the step of receiving the update message that carries the newly generated HIT comprises:
receiving the update message that carries the newly generated HIT through a newly created secure channel or an existing secure channel.

3. A method for obtaining a Host Identity Tag (HIT), comprising:
receiving, by a third-party server, an update message that carries a newly generated HIT, and establishing a mapping relationship between the new HIT and a corresponding old HIT; and
obtaining, by a host, the newly generated HIT according to the old HIT and the mapping relationship.

4. The method according to claim 3, wherein:
the update message is transmitted through a newly created secure channel or an existing secure channel; and
the third-party server comprises a Domain Name System (DNS) server, or a Rendezvous Server (RVS), or a server for mapping an HIT to an Internet Protocol (IP) address.

5. The method according to claim 4, wherein if the third-party server is the server for mapping the HIT to an IP address, after the obtaining the newly generated HIT, the method further comprises:
obtaining a current IP address of the host according to the newly generated HIT.

6. A system for obtaining a Host Identity Tag (HIT), comprising:
a first host, configured to send an update message that carries a newly generated HIT; and
a second host, configured to obtain the newly generated HIT from the update message sent by the first host.

7. The system according to claim 6, wherein the first host comprises:
a first sending module, configured to send the update message through a newly created secure channel; and
a second sending module, configured to send the update message through an existing secure channel.

8. A system for obtaining a Host Identity Tag (HIT), comprising:
a first host, configured to send an update message that carries a newly generated HIT; and
a third-party server, configured to receive the update message and establish a mapping relationship between the new HIT and a corresponding old HIT; and
a second host, configured to obtain the newly generated HIT according to the old HIT and the mapping relationship.

9. The system according to claim 8, wherein:
the third-party server comprises a Domain Name System (DNS) server, or a Rendezvous Server (RVS), or a server for mapping an HIT to an Internet Protocol (IP) address.

10. The system according to claim 9, wherein:
if the third-party server is the server for mapping the HIT to an IP address, after obtaining the newly generated HIT, the second host obtains a current IP address of the first host according to the newly generated HIT.
